# EUROPÄISCHE PATENTSCHRIFT

(11) **EP 0 362 496 B1**
(45) Veröffentlichungstag und Bekanntmachung des Hinweises auf die Patenterteilung: **20.10.1993**
(21) Anmeldenummer: 89112793.8
(22) Anmeldetag: 13.07.1989
(51) Int. Cl.: H02H 7/08, H02P 5/418

(54) **Steuerschaltung eines Universalmotors**
Control circuit for a universal motor
Circuit de commande pour un moteur universel

(30) Priorität: 04.10.1988 DE 3833702
(43) Veröffentlichungstag der Anmeldung: 11.04.1990
(73) Patentinhaber: AKO-Werke GmbH & Co, D-7988 Wangen/Allgäu (DE)
(72) Erfinder: Natterer, Helmut, D-7989 Argenbühl 1 (DE)
(74) Vertreter: Gaiser, Hartmut, Dipl.-Ing.

(56) Entgegenhaltungen:
- EP-A- 0 162 423
- DE-A- 3 511 894
- US-A- 4 514 670

## Beschreibung

Die Erfindung betrifft eine Steuerschaltung eines Universalmotors mit einer Reihenschaltung aus einer Ankerwicklung, aus einer Feldwicklung, aus einem elektronischen Schalter, der von einer Drehzahl-Steuereinrichtung gesteuert ist, sowie aus einer Sicherung und mit zwei einer der Wicklungen zugeordneten, von einer Einrichtung zur Drehrichtungsumkehr geschalteten Umschaltkontakten.

Solche Steuerschaltungen werden beispielsweise bei Waschmaschinen verwendet. Eine derartige Steuerschaltung ist in der EP 0 165 864 B1 beschrieben. Als elektronischer Schalter ist ein Triac vorgesehen, über den die Drehzahl des Motors gesteuert wird. Bei solchen Steuerschaltungen ist ein Kurzschluß des Triacs nicht ausgeschlossen. In einem solchen Fall steigt der Motorstrom an, ohne daß es notwendigerweise zum Ansprechen der Sicherung kommt. Die Drehzahl der vom Motor angetriebenen Trommel der Waschmaschine steigt dadurch unkontrolliert hoch an. Wird dann auch noch über die Wende-Umschaltkontakte die Drehrichtung immer wieder umgeschaltet, dann ist mit schweren Beschädigungen der Maschine zu rechnen.

In der EP 0 165 864 B1 ist ein die Ankerwicklung überbrückender Schaltzweig vorgesehen, der die Ankerwicklung kurzschließt, wenn ein Kurzschluß am Triac auftritt. Dadurch wird der im Kurzschlußfall durch die Feldwicklung fließende Strom so erhöht, daß die vorgesehene Sicherung anspricht und dadurch der Motor abschaltet. Der zusätzliche Schaltkreis stellt einen zusätzlichen Schaltungsaufwand dar. Der Schaltzweig muß im Kurzschlußfall durchgeschaltet werden. Dafür ist es notwendig, mit einer zusätzlichen Einrichtung den Kurzschluß des Triacs zu erfassen.

Eine Drehzahl-Steuerschaltung eines Waschmaschinenmotors mit einem Mikroprozessor, der einen Triac und ein zwei Umschaltkontakte aufweisendes Wenderelais steuert, ist in der DE-OS 34 19 408 beschrieben.

Aufgabe der Erfindung ist es, eine Steuerschaltung der eingangs genannten Art anzugeben, bei der auf einfache Weise sichergestellt ist, daß die Sicherung im Falle eines Kurzschlusses des elektronischen Schalters anspricht.

Erfindungsgemäß ist obige Aufgabe bei einer Steuerschaltung der eingangs genannten Art dadurch gelöst, daß die Einrichtung den einen Umschaltkontakt um eine erste Zeitspanne nach dem anderen Umschaltkontakt von seiner einen Stellung in seine andere Stellung schaltet, so daß in dieser Zeitspanne die den Umschaltkontakten zugeordnete Wicklung überbrückt ist, und daß der elektronische Schalter in einer zweiten Zeitspanne von der Drehzahl-Steuereinrichtung gesperrt ist und die erste Zeitspanne innerhalb der zweiten Zeitspanne liegt.

Während des normalen Betriebs bleibt die Überbrückung der Wicklung in der ersten Zeitspanne, die zwischen der Drehrichtungsumschaltung liegt, wirkungslos, da während dieser Zeitspanne der elektronische Schalter gesperrt ist und kein Drehzahl- Sollwert an ihn gelegt ist. Ist jedoch der elektronische Schalter kurzgeschlossen, dann dreht der Motor auch in der ersten Zeitspanne mit maximaler Drehzahl. Bei einem folgenden Drehzahl-Umkehrsignal wirkt sich die dann über die Umschaltkontakte auftretende Überbrückung der betreffenden Wicklung so aus, daß über die andere Wicklung und die Sicherung ein erhöhter Strom fließt, der die Sicherung mit Sicherheit zum Schmelzen bringt. Der Motor wird abgeschaltet, ohne vorher in die umgekehrte Drehrichtung zu gehen.

Vorzugsweise ist die erste Zeitspanne länger als 0,1 s. Sie liegt vorzugsweise bei 0,2 s. Der genannte im Kurzschlußfall auftretende Strom dauert dann hinreichend lang an, um das Ansprechen der Sicherung zu gewährleisten.

Die genannte Steuerschaltung ist mit geringstem Kostenaufwand zu realisieren, da sie praktisch keine zusätzlichen Bauteile benötigt.

Die Einrichtung, die den einen Wendeumschaltkontakt zeitversetzt zum anderen Umschaltkontakt steuert, ist beispielsweise ein übliches Programmschaltwerk, bei dem Nockenscheiben der Zeitverzögerung entsprechend winkelversetzt sind. Die Einrichtung kann auch von Wenderelais gebildet sein, deren eines den ihm zugeordneten Umschaltkontakt entsprechend zeitverzögert schaltet.

Weitere Ausgestaltungen der Erfindung ergeben sich aus der folgenden Beschreibung eines Ausführungsbeispiels. In der Zeichnung zeigen:
Figur 1 eine Steuerschaltung eines Universalmotors und
Figur 2 ein Schaltdiagramm.

Ein Motor(1) einer Waschmaschine weist eine Ankerwicklung(2) und eine in Reihe geschaltete Feldwicklung(3) auf. In Reihe zur Feldwicklung(3) liegen ein Triac(4) und eine Sicherung(5). Diese Reihenschaltung liegt zwischen den Polen(L,N) des elektrischen Netzes.

Über ein Netzteil(6) ist eine Drehzahl-Steuereinrichtung (7) an das Netz angeschlossen, die den Triac(4) steuert.

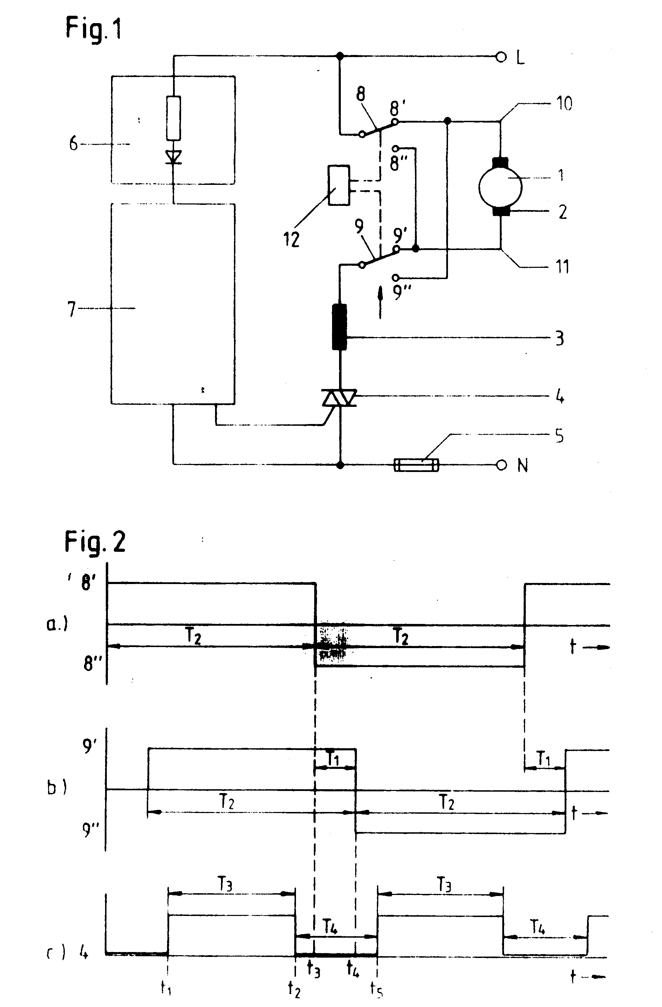

Der Ankerwicklung(2) sind zwei Wende- Umschaltkontakte (8,9) zugeordnet. Dabei liegen ein erster Pol(8') des Umschaltkontakts(8) und ein zweiter Pol(9'') des anderen Umschaltkontakts(9) an dem einen Ende(10) der Ankerwicklung(2). Ein zweiter Pol(8'') des Umschaltkontakts(8) sowie ein erster Pol(9') des anderen Umschaltkontakts(9) liegen an dem anderen Ende(11) der Ankerwicklung(2). Die Umschaltkontakte(8,9) werden von einem Programmschaltwerk(12) gesteuert. Diese Steuerung erfolgt so, daß nicht beide Umschaltkontakte(8,9) gleichzeitig umgeschaltet werden. Der Umschaltkontakt(9) wird immer um eine bestimmte Zeitspanne(T1) nach dem ersten Umschaltkontakt(8) umgeschaltet (vgl. Figur 2a und Figur 2b). Diese Zeitspanne(T1) ist größer als 0,1 s, jedoch wesentlich kleiner als die Zeitdauer(T2), während der die Umschaltkontakte(8,9) in ihrer einen oder anderen Schaltstellung stehen.

Der Triac(4) ist von der Steuereinrichtung(7) so gesteuert, daß er jeweils in einer Zeitdauer(T3) gezündet ist, wobei zwischen diesen Zeitdauern(T3) eine zweite Zeitspanne(T4) liegt, in der der Triac(4) im Betrieb gesperrt ist (vgl. Figur 2c). Die zweite Zeitspanne(T4) ist länger als die erste Zeitspanne(T1). Die erste Zeitspanne(T1) beginnt nach der Zeitspanne(T4) und endet vor deren Ablauf. Die Zeitdauer(T3) liegt jeweils innerhalb der Zeitdauern(T2) der Umschaltkontakte(8,9) (vgl. Figur 2).

Die Funktionsweise der beschriebenen Schaltung ist ausgehend von der in Figur 1 dargestellten Stellung der Umschaltkontakte(8,9) etwa folgende:
Zu einem Zeitpunkt(t1) wird der Triac(4) gezündet. Der Umschaltkontakt(8) liegt an seinem Pol(8') an (vgl. Fig.2a). Der Umschaltkontakt(9) liegt an seinem Pol(9') an (vgl. Fig.2b). Der Motor(1) läuft auf die Solldrehzahl hoch. Zum Zeitpunkt(t2) wird der Triac(4) gesperrt, so daß der Motor(1) stehenbleibt. Zu einem Zeitpunkt(t3) wird dann der Umschaltkontakt(8) auf seinen Pol(8'') umgeschaltet. Die Ankerwicklung(2) ist dadurch überbrückt, wobei ihr Ende(10) frei liegt. Es besteht ein durchgehender Stromweg von dem Pol(L) über den Umschaltkontakt(8), dessen Pol(8''), den Pol(9') und den Umschaltkontakt(9) zur Feldwicklung(3). Ein Strom jedoch kann nicht fließen, da der Triac(4) gesperrt ist.

Dieser Zustand bleibt erhalten, bis nach der ersten Zeitspanne(T1) zum Zeitpunkt(t4) auch der Umschaltkontakt(9) auf seinen Pol(9'') geschaltet ist. Die Ankerwicklung(2) ist nun nicht mehr überbrückt, sondern umgepolt. Zum anschließenden Zeitpunkt(t5) wird der Triac(4) wieder gezündet, so daß der Motor(1) nun in Gegenrichtung auf Solldrehzahl dreht.

Die beschriebenen Vorgänge wiederholen sich zyklisch.

Tritt am Triac(4) ein Kurzschluß auf, dann hat dies zur Folge, daß der Triac(4) auch in der zweiten Zeitspanne(T4) leitend ist. Die die Ankerwicklung(2) überbrückende Verbindung der Pole(8'' und 9') bzw. der Pole(9'' und 8') während der ersten Zeitspanne(T1) hat nun zur Folge, daß über die Feldwicklung(3), den Kurzschluß des Triacs(4) und die Sicherung(5) ein Strom fließt, der die Sicherung(5) zum Schmelzen bringt. Der Motor(1) wird dadurch abgeschaltet, bevor er seine Drehrichtung nochmals ändert. Beschädigungen der Maschine sind dadurch vermieden.

## Patentansprüche

1. Steuerschaltung eines Universalmotors(1) mit einer Reihenschaltung aus einer Ankerwicklung(2), aus einer Feldwicklung(3), aus einem elektronischen Schalter(4), der von einer Drehzahl-Steuereinrichtung(7) gesteuert ist, sowie aus einer Sicherung(5) und mit zwei einer der Wicklungen zugeordneten, von einer Einrichtung zur Drehrichtungsumkehr geschalteten Wende-Umschaltkontakten, dadurch gekennzeichnet, daß die Einrichtung(12) den einen Umschaltkontakt(9) um eine erste Zeitspanne(T1) nach dem anderen Umschaltkontakt(8) von seiner einen Stellung in seine andere Stellung schaltet, so daß in dieser Zeitspanne(T1) die den Umschaltkontakten(8,9) zugeordnete Wicklung(2) überbrückt ist, und daß der elektronische Schalter(4) in einer zweiten Zeitspanne(T4) von der Drehzahl- Steuereinrichtung(7) gesperrt ist und die erste Zeitspanne(T1) innerhalb der zweiten Zeitspanne(T4) liegt.

2. Steuerschaltung nach Anspruch 1, dadurch gekennzeichnet, daß die erste Zeitspanne(T1) länger als 0,1 s ist.

3. Steuerschaltung nach Anspruch 1 oder 2, dadurch gekennzeichnet, daß die Einrichtung zur Steuerung der Umschaltkontakte(8,9) von wenigstens einer Nockenscheibe eines Programmschaltwerks(12) gebildet ist.

4. Steuerschaltung nach Anspruch 1 oder 2, dadurch gekennzeichnet, daß die Einrichtung zur Steuerung der Umschaltkontakte(8,9) von Relais gebildet ist.

## Claims

1. Control circuit for a universal motor (1), having a series circuit composed of an armature winding (2), a field winding (3), an electronic switch (4) controlled by a revolution count control device (7), and a fuse (5), and having two reversing change-over contacts associated with one of the windings and connected by a device for changing the direction of rotation, in that the device (12) switches one (9) of the change-over contacts by a first time span (T1) after the other change-over contact (8) from one position into the other, so that in this time span (T1) the winding (2) associated with the change-over contacts (8, 9) is bridged, and in that the electronic switch (4) is locked in a second time span (T4) by the revolution count control device (7), and the first time span (T1) lies within the second time span (T4).

2. Control circuit according to claim 1, characterised in that the first time span (T1) is longer than 0.1 s.

3. Control circuit according to claim 1 or 2, characterised in that the device for controlling the change-over contacts (8, 9) is formed of at least one cam disc of a programmer (12).

4. Control circuit according to claim 1 or 2, characterised in that the device for controlling the change-over contacts (8, 9) is formed of relays.

## Revendications

1. Circuit de commande d'un moteur universel (1) comprenant un montage en série d'un enroulement d'induit (2), d'un enroulement de champ (3), d'un interrupteur électronique (4), qui est commandé par un dispositif de commande (7) de la vitesse de rotation, ainsi que d'un fusible (5) et comprenant deux contacts inverseurs à permutation commutés par un dispositif pour l'inversion du sens de rotation et associés à l'un des enroulements, caractérisé en ce que le dispositif (12) commute, dans un premier laps de temps (T1) après l'autre contact à permutation (8), le premier contact à permutation (9) de sa première position à sa seconde position, de sorte que dans ce laps de temps (T1), l'enroulement (2) associé aux contacts à permutation (8, 9) est ponté, en ce que l'interrupteur électronique (4) est bloqué dans un deuxième laps de temps (T4) par le dispositif de commande (7) de la vitesse de rotation et que le premier laps de temps (T1) se trouve dans le second laps de temps (T4).

2. Circuit de commande selon la revendication 1, caractérisé en ce que le premier laps de temps (T1) est supérieur à 0,1 s.

3. Circuit de commande selon la revendication 1 ou 2, caractérisé en ce que le dispositif pour la commande des contacts à permutation (8, 9) est formé par au moins un disque à cames d'un programmateur (12).

4. Circuit de commande selon la revendication 1 ou 2, caractérisé en ce que le dispositif pour la commande des contacts à permutation (8, 9) est formé par des relais.
